# EUROPÄISCHE PATENTSCHRIFT

(11) **EP 1 172 367 B1**
(45) Veröffentlichungstag und Bekanntmachung des Hinweises auf die Patenterteilung: **09.08.2006**
(21) Anmeldenummer: 01115055.4
(22) Anmeldetag: 21.06.2001
(51) Int. Cl.: C07F 7/18

(54) **Verfahren zur Herstellung von Organosilylalkylpolysulfanen**
Process for preparing organosilylalkyl-polysulfanes
Procédé de préparation d' organosilylakylpolysulfanes

(30) Priorität: 15.07.2000 DE 10034493
(43) Veröffentlichungstag der Anmeldung: 16.01.2002
(73) Patentinhaber: Degussa AG, 40474 Düsseldorf (DE)
(72) Erfinder: Alig, Alfred, 63826 Geiselbach-Omensbach (DE); Batz Sohn, Christoph, Dr., 63454 Hanau-Mittelbuchen (DE); Deschler, Ulrich, Dr., 63877 Sailauf (DE); Michel, Rudolf, 63579 Freigericht (DE); Münzenberg, Jörg, Dr., 63457 Hanau (DE); Sonnenschein, Raymund, Dr., 36695 Mobile, Alabama (US); Willi, Werner, 63571 Gelnhausen (DE); Zezulka, Gerd Rainhard, 63456 Hanau (DE); Rützel, Karl-Heinz, 50354 Hürth (DE)

(56) Entgegenhaltungen:
- EP-A- 0 848 006
- EP-A- 0 908 463
- EP-A- 0 937 732

## Beschreibung

Die Erfindung betrifft ein Verfahren zur Herstellung von Organosilylalkylpolysulfanen.

Es ist bekannt, daß Organosilylalkylpolysulfane wie Bis-(3,3'-triethoxysilylpropyl)tetrasulfan (DE 2 141 159) und - disulfan als Silanhaftvermittler oder Verstärkungsadditiv in oxidisch gefüllten Kautschukmischungen eingesetzt werden. Die Kautschukmischungen werden unter anderem für technische Gummiartikel und für Teile des Autoreifens, insbesondere für Laufflächen, verwendet (DE 2 141 159, DE 2 212 239, US 3 978 103, US 4 048 206, EP 819694).

Es ist weiterhin bekannt, daß die Alkoxysilylfunktion, meist eine Trimethoxysilyl- oder Triethoxysilylgruppe, während der Mischungsherstellung mit den Silanolgruppen des Füllstoffs, meist Kieselsäuren, reagiert und so das Silan auf der Füllstoffoberfläche fixiert wird. Die Ausbildung der Füllstoff-Kautschukbindung erfolgt dann während des Vulkanisationsprozesses über die Schwefelfunktionalität des fixierten Silans. Die Reaktivität der Organosilylalkylpolysulfane hängt dabei entscheidend von der Länge der Polysulfankette ab. Lange Ketten mit vielen Schwefelatomen zeigen eine hohe Reaktivität. Diese hohe Reaktivität kann allerdings zu unerwünschter vorzeitiger Reaktion während der Verarbeitung führen. Dagegen sind kurzkettige Derivate deutlich weniger reaktiv, können aber über Zugabe zusätzlichen elementaren Schwefels zu einem späteren Zeitpunkt des Produktionsprozesses gezielt aktiviert werden. Diese gezielte Aktivierbarkeit der Verbindungen führt zu einer ökonomischeren Herstellung von Gummiartikeln und zu größerer Verarbeitungssicherheit. Besondere Vorteile haben Organosilylalklyldisulfane mit hohem Disulfananteil (EP 732362, L. Panzer, American Chem. Soc., Rubber Div. Meeting 1997).

Ferner ist bekannt, daß Organosilylalkylpolysulfane mit reduzierter Polysulfankettenlänge aus den entsprechenden langkettigen Organosilylalkylpolysulfanen hergestellt werden. Aus EP 0773224 ist ein Verfahren bekannt, bei dem Organosilylalkylpolysulfane mit Hilfe von Cyaniden, Phosphanen oder Sulfiten zu den entsprechenden Disulfanen abgebaut werden. In EP 0845472 und WO 97/48264 werden zur Reduzierung der Polysulfanketten Organophosphor(III)-Verbindungen (u.a. Phosphite und P-N-Verbindungen) verwendet.

Diese Verfahren haben den Nachteil, daß je Moläquivalent aus dem Organosilylalkylpolysulfan entfernten Schwefel ein Moläquivalent Thiocyanat, Organophosphor(V)sulfid oder Thiosulfat als Nebenprodukt entsteht.

Aus EP 0894803 ist ein Verfahren bekannt, in dem das bei der Desulfurierung mit Cyanid entstehende Thiocyanat mit einem Organosilylalkylhalogenid zu einem ebenfalls kautschukreaktiven Organosilylalkylthiocyanat umgesetzt wird.

Nachteil dieses Verfahrens ist, daß ein Gemisch aus einem Organosilylalkyldisulfan und einem Organosilylalkylthiocyanat erhalten wird.

Ferner sind aus EP 0908463 und EP 0937732 Verfahren zur Reduktion der Schwefelkettenlänge in Organosilylalkylpolysulfanen bekannt, bei denen die genannten Polysulfane mit einem wasserfreien beziehungsweise nahezu wasserfreien ionischen Sulfid und anschließend mit Organosilylalkylhalogeniden umgesetzt werden.

Nachteil bei diesem Verfahren ist die Bildung von beträchtlichen Mengen des Nebenproduktes Organosilylalkylmonosulfan, welches nicht mit der Kautschukmatrix reagieren kann. Produkte aus diesem Verfahren zeichnen sich somit durch einen geringen Wirkstoffanteil aus.

Aufgabe der Erfindung ist es, ein alternatives Verfahren zur Herstellung von Organosilylalkylpolysulfan zur Verfügung zu stellen, wobei wenig zu entsorgende Nebenprodukte anfallen.

Gegenstand der Erfindung ist ein Verfahren zur Herstellung von Organosilylalkylpolysulfanen der allgemeinen Formel I

(R¹R²R³SiR⁴)₂Sₓ (I)

in der bedeuten
- R¹, R², R³:: gleich oder verschieden voneinander, verzweigte und unverzweigte Alkyl- und/oder Alkoxygruppen mit einer Kettenlänge von 1 - 8 C-Atomen, bevorzugt 1 - 3 C-Atomen, Arylreste, insbesondere Phenyl, Toluyl, Benzyl, wobei mindestens eine Alkoxygruppe vorhanden ist;
- R⁴: zweiwertiger Alkylenrest mit einer Kettenlänge von 1-8 C-Atomen, wie beispielsweise Methylen, Ethylen, i-Propylen, bevorzugt n-Propylen, i-Butylen, 2-Methylpropylen, n-Butylen, n-Pentylen, 2-Methylbutylen, 3-Methylbutylen, n-Pentylen, 1,3-Dimethylpropylen oder 2,3-Dimethylpropylen, bevorzugt 1 bis 4 C-Atome, oder -(CH₂)ₙ-C₆H₄-(CH₂)ₙ- mit n = 1 - 4,
- x:: zahl ≥ 1, bevorzugt zwischen 2 und 3,
welches dadurch gekennzeichnet ist, daß man Organosilylalkylpolysulfan der allgemeinen Formel II

(R¹R²R³SiR⁴)₂S_{y} (II)

in der
- R¹, R², R³ und R⁴: die oben angegebene Bedeutung besitzen und
- y :: Zahl > x, bevorzugt zwischen 2 und 6, besonders bevorzugt zwischen 3 und 5,
mit einem ionischen Sulfid der allgemeinen Formel III

M⁺₂S²⁻ (III)

in der M⁺ für ein Alkalimetallkation, beispielsweise Natrium- oder Kaliumkation, ein Ammoniumion, ein halbes Erdalkalimetallkation oder ein halbes Zinkkation steht,
und einem Organosilylalkylhalogenid der allgemeinen Formel IV

R¹R²R³SiR⁴X (IV)

in der
- R¹, R², R³ und R⁴: die oben angegebene Bedeutung besitzen und
- X :: Chlor, Brom oder Jod ist,
umsetzt, wobei das langkettige Organosilylalkylpolysulfan der allgemeinen Formel (II) und das Organosilylalkylhalogenid der allgemeinen Formel (IV) vorgelegt werden und zu dieser Lösung das ionische Sulfid der allgemeinen Formel (III) in mehreren Portionen zugegeben wird.

Wegen der Hydrolyseanfälligkeit der Ausgangssubstanzen gemäß Formel (II) und Formel (IV) können die Sulfide der allgemeinen Formel III wasserfrei beziehungsweise nahezu wasserfrei sein. Das Sulfid der allgemeinen Formel III kann maximal 10 Gew.-%, vorzugsweise 0 - 5 Gew.-%, besonders bevorzugt 0 - 2 Gew.-%, Wasser enthalten. Sulfide der allgemeinen Formel III können erhalten werden durch:
1. Umsetzung von Alkalialkoholaten mit Schwefelwasserstoff (EP 705838).
2. Umsetzung von Ammoniakgas mit Schwefelwasserstoff (DE 2648241).
3. Trocknung von Alkalisulfid-Hydraten (JP 7228588, DE 19610281, DE 19651849).

Dabei ist es unerheblich, ob die Trocknung der Alkalisulfid-Hydrate azeotrop oder durch Erhitzen im Vakuum durchgeführt wird. Vorteilhafter Weise kann das benötigte ionische Sulfid nach dem in der DE 196 51849 beschriebenen Verfahren hergestellt werden. Das ionische Sulfid der allgemeinen Formel (III) kann in Form eines Feststoffs sowohl als vermahlenes Pulver oder als Plättchen, wie sie bei handelsüblichen Alkalisulfid-Hydraten angeboten werden, oder in Form einer Lösung oder Suspension des Feststoffs in einem organischen Lösungsmittel eingesetzt werden.

Als polares organisches Lösungsmittel können alle polaren Lösungsmittel eingesetzt werden, in denen das ionische Sulfid der allgemeinen Formel (III) wenigstens teilweise löslich ist und die nicht mit der Organosiliciumverbindung der allgemeinen Formel (II) reagieren.

Die molaren Verhältnisse der Edukte gemäß den Formeln (II) und (III) können davon abhängig sein, welche mittlere Polysulfankettenlänge y in der Ausgangsverbindung vorhanden ist und welche mittlere Polysulfankettenlänge x im Endprodukt erhalten werden soll. Das molare Verhältnis zwischen dem ionischen Sulfid der Formel (III) und dem Organosilylalkylhalogenids der Formel (IV) kann wiederum abhängig sein vom Wirkstoffanteil des ionischen Sulfids. Es kann zwischen 1,5 und 2,5 Moläquivalenten, bevorzugt zwischen 1,8 und 2,2 Moläquivalenten, Organosilylalkylhalogenid der Formel (IV) je Moläquivalent ionisches Sulfid der Formel (III) liegen.

Die Umsetzung kann unter Luft- und Wasser-(Feuchtigkeits)ausschluß durchgeführt werden, um die Bildung von Nebenprodukten zu unterdrücken beziehungsweise weitgehendst zu vermeiden. Die Reaktion kann bei erhöhter Temperatur durchgeführt werden. Dabei ist es für das erfindungsgemäße Verfahren unwesentlich, ob zur Erreichung der Reaktionstemperatur das Reaktionsgemisch von außen erwärmt werden muß oder sich durch freiwerdende Exothermie von allein erwärmt. Die Reaktion kann zwischen Raumtempertaur und 200°C, bevorzugt zwischen 40°C und der Siedetemperatur des eingesetzten Lösungsmittels, durchgeführt werden. Die Reaktion kann unter Normaldruck, vermindertem oder erhöhtem Druck durchgeführt werden.

Nach Umsetzung kann man das ausgefallene ionische Halogenid abfiltrieren und das Lösungsmittel abdestillierten.

Mit dieser Verfahrensweise können die Organosilylalkylpolysulfane der Formel (I) ohne störenden Anfall an nicht abtrennbaren unreaktiven Nebenprodukten hergestellt werden.

Die Polysulfankettenlängen x in der Formel (I) und y in der Formel (II) sind als Mittelwerte zu verstehen. Die Werte x und y bezeichnen die mittleren Längen der in dem Produktgemisch vorhandenen Polysulfaneinheit.

Da die Polysulfankettenlänge der Verbindung der Formel (II) bei der erfindungsgemäßen Umsetzung reduziert werden soll, sodass die Verbindung der Formel (I) resultiert, muß y > x sein.

In einer besonders bevorzugten Ausführungsform der Erfindung kann das Organosilylalkylpolysulfan der allgemeinen Formel (II) bereits bei seiner Entstehung (in situ) mit dem ionischen Sulfid der allgemeinen Formel (III) und dem Organosilylalkylhalogenid der allgemeinen Formel (IV) umgesetzt werden. Dabei kann das in situ aus einem Organosilylalkylhalogenid der allgemeinen Formel IV und einem ionischen Polysulfid der allgemeinen Formel V

M⁺₂S_{y}²⁻ (V)

in der M⁺ und y die oben angegebene Bedeutungen haben,
hergestellte Organosilylalkylpolysulfan der allgemeinen Formel (II) mit einem ionischen Sulfid der allgemeinen Formel (III) und weiterem Organosilylalkylhalogenid der allgemeinen Formel (IV) umgesetzt werden. Die Umsetzung kann in einem polaren organischen Lösungsmittel erfolgen. Das für die Reaktion notwendige Organosilylalkylhalogenid der allgemeinen Formel (IV) kann mit dem ionischen Polysulfid der allgemeinen Formel (V) erhitzt und bei erhöhter Temperatur das für die Reduktion der Polysulfankettenlänge notwendige ionische Sulfid der allgemeinen Formel (III) in mehreren Portionen zudosiert werden.

Der Gehalt an Schwefel in dem ionischen Polysulfid der allgemeinen Formel (V) kann identisch sein mit der mittleren Polysulfankettenlänge y des Organosiliciumpolysulfids der Formel (II), das intermediär gebildet werden kann.
Als ionische Polysulfide der allgemeinen Formel (V) können vorzugsweise Natrium-, Kalium- oder Ammoniumpolysulfid, besonders bevorzugt Natriumpolysulfid, verwendet werden. Wegen der Hydrolyseanfälligkeit der Ausgangssubstanzen gemäß Formel (II) und Formel (IV) können die ionischen Polysulfide der allgemeinen Formel (V) wasserfrei beziehungsweise nahezu wasserfrei sein. Das Polysulfid der allgemeinen Formel (V) kann maximal 10 Gew.-% Wasser, vorzugsweise 0 - 5 Gew.-%, besonders bevorzugt 0 - 2 Gew.-%, enthalten. Polysulfide der allgemeinen Formel (V) können erhalten werden durch:
1. Reaktion zwischen einem wasserfreien oder nahezu wasserfreiem Sulfid und Schwefel (JP 7228588)
2. Reaktion zwischen elementarem Alkalimetallen und Schwefel, entweder in der Schmelze (US 4640832) oder in einem inerten Lösungsmittel (DE 19819373, EP 949263, G. Brauer, Handbuch der präparativen anorganischen Chemie, 3. Auflage, Stuttgart 1975, Band 1, S. 376 ff)
3. Reaktion zwischen Alkoholaten und Schwefel (US 5596116)
4. Reaktion zwischen wasserhaltigem Alkalisulfid und Schwefel mit anschließender Trocknung (DE 19651849)
5. Reaktion zwischen Alkalihydroxid und Schwefel mit anschließender Trocknung (DE 19930495)

Das ionische Polysulfid gemäß Formel (V) kann ohne Einfluß auf den Reaktionserfolg in Form eines Feststoffs (Pulver, Granulate) oder in Form einer Lösung oder Suspension des Feststoffs in einem organischen Lösungsmitel eingesetzt werden.

Bei der besonders bevorzugten Ausführungsform der Erfindung, bei der das Organosilylalkylpolysulfan der Formel (II) bereits bei seiner Entstehung weiter zur Zielverbindung der Formel (I) umgesetzt wird, kann das molare Verhältnis zwischen dem für die Herstellung des Organosilylalkylpolysulfans der Formel (I) benutzte ionische Polysulfid der Formel (V) und dem ionischen Sulfid gemäß Formel (III) so eingestellt werden, daß der mittlere Schwefelgehalt dieses Gemischs ungefähr der mittlere Schwefelkettenlänge x in der Zielverbindung (I) entspricht. Das molare Verhältnis zwischen dem ionischen Polysulfids der Formel (V) und dem ionischen Sulfids der Formel (III) und dem Organosilylalkylhalogenids der Formel (IV) kann wiederum abhängig vom Wirkstoffanteil des ionischen Polysulfids und Sulfids sein. Es kann zwischen 1,5 und 2,5 Moläquivalenten, bevorzugt zwischen 1,8 und 2,2 Moläquivalenten Organosilylalkylhalogenid der Formel (IV) je Moläquivalent Polysulfid und Sulfid liegen.

### Beispiele:

### Vergleichsbeispiel 1: Herstellung von Bis (3,3'-triethoxysilylpropyl) disulfan aus Bis (3,3'-triethoxysilylpropyl)-tetrasulfan, 3-Chlorpropyltriethoxysilan und Natriumsulfid

In einem 500 ml Dreihalskolben mit Rückflußkühler und Magnetrührer werden unter N₂-Schutzgas 67,4 g (0,13 mol) Bis(3,3'-triethoxysilylpropyl)tetrasulfan und 18,5 g (0,24 mol) Natriumsulfid in 120 ml Ethanol vorgelegt. Dazu werden bei Raumtemperatur 108,7 g (0,45 mol) 3-Chlorpropyltriethoxysilan gegeben und das Reaktionsgemisch 2,5 h bei Rückflußtemperatur gehalten. Nach Abkühlen auf Raumtemperatur wird vom Niederschlag abfiltriert und der Filtrierrückstand 3 mal mit je 30 ml Ethanol gewaschen. Die gesammelten Filtrate werden im Rotationsverdampfer bei 110°C bis zu einem Endvakuum von 40 mbar eingeengt. Man erhält 153,1 g einer gelben Flüssigkeit, die nach ¹H-NMR-spektroskopischer Analyse einem Polysulfangemisch mit einer mittleren Polysulfankettenlänge von 2,0 entspricht. Das Produkt enthält 10 Gew.-% Monosulfan (δ 2,5 ppm). Ausbeute: 90 % (bezogen auf 3-Chlorpropyltriethoxysilan).

### Beispiel 1: Herstellung von Bis(3,3'-triethoxysilylpropyl)-disulfan aus Bis(3,3'-triethoxysilylpropyl)tetrasulfan, 3-Chlorpropyltriethoxysilan und Natriumsulfid mit portionsweiser Dosierung des Natriumsulfids

In einem 500 ml Dreihalskolben mit Rückflußkühler und Magnetrührer werden unter N₂-Schutzgas 67,4 g (0,13 mol) Bis(3,3'-triethoxysilylpropyl)tetrasulfan und 108,7 g (0,45 mol) 3-Chlorpropyltriethoxysilan in 120 ml Ethanol vorgelegt und auf 60°C erhitzt. Zu dieser Reaktionsmischung wird insgesamt 18,5 g (0,24 mol) Natriumsulfid in vier gleichen Portionen mit einem zeitlichen Abstand von jeweils 5 min zugegeben. Dabei erwärmt sich die Reaktionsmischung weiter bis zum Sieden. Nach der letzten Natriumsulfidzugabe wird noch 2 h am Rückfluß erhitzt. Nach Abkühlen auf Raumtemperatur wird vom Niederschlag abfiltriert und der Filtrierrückstand 3 mal mit je 30 ml Ethanol gewaschen. Die gesammelten Filtrate werden im Rotationsverdampfer bei 110°C bis zu einem Endvakuum von 40 mbar eingeengt. Man erhält 152,3 g einer gelben Flüssigkeit, die nach ¹H-NMR-spektroskopischer Analyse einem Polysulfangemisch mit einer mittleren Polysulfankettenlänge von 2,0 entspricht. Das Produkt enthält 2,1 Gew.-% Monosulfan (δ 2,5 ppm). Ausbeute: 91 % (bezogen auf 3-Chlorpropyltriethoxysilan).

### Beispiel 2: Herstellung von Bis(3,3'-triethoxysilylpropyl)-disulfan aus Bis(3,3'-triethoxysilylpropyl)tetrasulfan, 3-Chlorpropyltriethoxysilan und Natriumsulfid mit portionsweiser Dosierung des Natriumsulfids

In einem 500 ml Dreihalskolben mit Rückflußkühler und Magnetrührer werden unter N₂-Schutzgas 67,4 g (0,13 mol) Bis(3,3'-triethoxysilylpropyl)tetrasulfan und 108,7 g (0,45 mol) 3-Chlorpropyltriethoxysilan in 120 ml Ethanol vorgelegt und auf 60°C erhitzt. Zu dieser Reaktionsmischung wird insgesamt 18,5 g (0,24 mol) Natriumsulfid in vier gleichen Portionen mit einem zeitlichen Abstand von jeweils 10 min zugegeben. Dabei erwärmt sich die Reaktionsmischung weiter bis zum Sieden. Nach der letzten Natriumsulfidzugabe wird noch 2 h am Rückfluß erhitzt. Nach Abkühlen auf Raumtemperatur wird vom Niederschlag abfiltriert und der Filtrierrückstand 3 mal mit je 30 ml Ethanol gewaschen. Die gesammelten Filtrate werden im Rotationsverdampfer bei 110°C bis zu einem Endvakuum von 40 mbar eingeengt. Man erhält 150,7 g einer gelben Flüssigkeit, die nach ¹H-NMR-spektroskopischer Analyse einem Polysulfangemisch mit einer mittleren Polysulfankettenlänge von 2,0 entspricht. Das Produkt enthält 2 Gew.-% Monosulfan (δ 2,5 ppm). Ausbeute: 88 % (bezogen auf 3-Chlorpropyltriethoxysilan).

### Beispiel 3: Herstellung von Bis(3,3'-triethoxysilylpropyl)-disulfan aus Bis(3,3'-triethoxysilylpropyl)tetrasulfan, 3-Chlorpropyltriethoxysilan und Natriumsulfid mit portionsweiser Dosierung des Natriumsulfids

In einem 500 ml Dreihalskolben mit Rückflußkühler und Magnetrührer werden unter N₂-Schutzgas 67,4 g (0,13 mol) Bis(3,3'-triethoxysilylpropyl)tetrasulfan und 108,7 g (0,45 mol) 3-Chlorpropyltriethoxysilan in 120 ml Ethanol vorgelegt und auf 60°C erhitzt. Zu dieser Reaktionsmischung wird insgesamt 18,5 g (0,24 mol) Natriumsulfid in vier gleichen Portionen mit einem zeitlichen Abstand von jeweils 15 min zugegeben. Dabei erwärmt sich die Reaktionsmischung weiter bis zum Sieden. Nach der letzten Natriumsulfidzugabe wird noch 2 h am Rückfluß erhitzt. Nach Abkühlen auf Raumtemperatur wird vom Niederschlag abfiltriert und der Filtrierrückstand 3 mal mit je 30 ml Ethanol gewaschen. Die gesammelten Filtrate werden im Rotationsverdampfer bei 110°C bis zu einem Endvakuum von 40 mbar eingeengt. Man erhält 152,4 g einer gelben Flüssigkeit, die nach ¹H-NMR-spektroskopischer Analyse einem Polysulfangemisch mit einer mittleren Polysulfankettenlänge von 2,0 entspricht. Das Produkt enthält 1,9 Gew.-% Monosulfan (δ 2,5 ppm). Ausbeute: 91 % (bezogen auf 3-Chlorpropyltriethoxysilan).

### Beispiel 4: Herstellung von Bis(3,3'-triethoxysilylpropyl)-disulfan aus Bis(3,3'-triethoxysilylpropyl)tetrasulfan, 3-Chlorpropyltriethoxysilan und Natriumsulfid mit portionsweiser Dosierung des Natriumsulfids

In einem 500 ml Dreihalskolben mit Rückflußkühler und Magnetrührer werden unter N₂-Schutzgas 67,4 g (0,13 mol) Bis(3,3'-triethoxysilylpropyl)tetrasulfan und 108,7 g (0,45 mol) 3-Chlorpropyltriethoxysilan in 120 ml Ethanol vorgelegt und auf 60°C erhitzt. Zu dieser Reaktionsmischung wird insgesamt 18,5 g (0,24 mol) Natriumsulfid in fünf gleichen Portionen mit einem zeitlichen Abstand von jeweils 5 min zugegeben. Dabei erwärmt sich die Reaktionsmischung weiter bis zum Sieden. Nach der letzten Natriumsulfidzugabe wird noch 2 h am Rückfluß erhitzt. Nach Abkühlen auf Raumtemperatur wird vom Niederschlag abfiltriert und der Filtrierrückstand 3 mal mit je 30 ml Ethanol gewaschen. Die gesammelten Filtrate werden im Rotationsverdampfer bei 110°C bis zu einem Endvakuum von 40 mbar eingeengt. Man erhält 149,1 g einer gelben Flüssigkeit, die nach ¹H-NMR-spektroskopischer Analyse einem Polysulfangemisch mit einer mittleren Polysulfankettenlänge von 2,0 entspricht. Das Produkt enthält 2,0 Gew.-% Monosulfan (δ 2,5 ppm). Ausbeute: 89 % (bezogen auf 3-Chlorpropyltriethoxysilan).

### Beispiel 5: Herstellung von Bis(3,3'-triethoxysilylpropyl)-disulfan aus Bis(3,3'-triethoxysilylpropyl)tetrasulfan, 3-Chlorpropyltriethoxysilan und Natriumsulfid mit portionsweiser Dosierung des Natriumsulfids

In einem 500 ml Dreihalskolben mit Rückflußkühler und Magnetrührer werden unter N₂-Schutzgas 67,4 g (0,13 mol) Bis(3,3'-triethoxysilylpropyl)tetrasulfan und 108,7 g (0,45 mol) 3-Chlorpropyltriethoxysilan in 120 ml Ethanol vorgelegt und auf 60°C erhitzt. Zu dieser Reaktionsmischung wird insgesamt 18,5 g (0,24 mol) Natriumsulfid in fünf gleichen Portionen mit einem zeitlichen Abstand von jeweils 10 min zugegeben. Dabei erwärmt sich die Reaktionsmischung weiter bis zum Sieden. Nach der letzten Natriumsulfidzugabe wird noch 2 h am Rückfluß erhitzt. Nach Abkühlen auf Raumtemperatur wird vom Niederschlag abfiltriert und der Filtrierrückstand 3 mal mit je 30 ml Ethanol gewaschen. Die gesammelten Filtrate werden im Rotationsverdampfer bei 110°C bis zu einem Endvakuum von 40 mbar eingeengt. Man erhält 154,1 g einer gelben Flüssigkeit, die nach ¹H-NMR-spektroskopischer Analyse einem Polysulfangemisch mit einer mittleren Polysulfankettenlänge von 2,0 entspricht. Das Produkt enthält 1,8 Gew.-% Monosulfan (δ 2,5 ppm). Ausbeute: 92 % (bezogen auf 3-Chlorpropyltriethoxysilan).

### Beispiel 6: Herstellung von Bis(3,3'-triethoxysilylpropyl)-disulfan aus Bis(3,3'-triethoxysilylpropyl)tetrasulfan, 3-Chlorpropyltriethoxysilan und Natriumsulfid mit portionsweiser Dosierung des Natriumsulfids

In einem 500 ml Dreihalskolben mit Rückflußkühler und Magnetrührer werden unter N₂-Schutzgas 67,4 g (0,13 mol) Bis(3,3'-triethoxysilylpropyl)tetrasulfan und 108,7 g (0,45 mol) 3-Chlorpropyltriethoxysilan in 120 ml Ethanol vorgelegt und auf 60°C erhitzt. Zu dieser Reaktionsmischung wird insgesamt 18,5 g (0,24 mol) Natriumsulfid in zehn gleichen Portionen mit einem zeitlichen Abstand von jeweils 5 min zugegeben. Dabei erwärmt sich die Reaktionsmischung weiter bis zum Sieden. Nach der letzten Natriumsulfidzugabe wird noch 2 h am Rückfluß erhitzt. Nach Abkühlen auf Raumtemperatur wird vom Niederschlag abfiltriert und der Filtrierrückstand 3 mal mit je 30 ml Ethanol gewaschen. Die gesammelten Filtrate werden im Rotationsverdampfer bei 110°C bis zu einem Endvakuum von 40 mbar eingeengt. Man erhält 149,0 g einer gelben Flüssigkeit, die nach ¹H-NMR-spektroskopischer Analyse einem Polysulfangemisch mit einer mittleren Polysulfankettenlänge von 2,0 entspricht. Das Produkt enthält 1,6 Gew.-% Monosulfan (δ 2,5 ppm). Ausbeute: 89 % (bezogen auf 3-Chlorpropyltriethoxysilan).

### Beispiel 7: Herstellung von Bis(3,3'-triethoxysilylpropyl)-disulfan aus Bis(3,3'-triethoxysilylpropyl)tetrasulfan, 3-Chlorpropyltriethoxysilan und Natriumsulfid mit portionsweiser Dosierung des Natriumsulfids

In einem 500 ml Dreihalskolben mit Rückflußkühler und Magnetrührer werden unter N₂-Schutzgas 67,4 g (0,13 mol) Bis(3,3'-triethoxysilylpropyl)tetrasulfan und 108,7 g (0,45 mol) 3-Chlorpropyltriethoxysilan in 120 ml Ethanol vorgelegt und auf 60°C erhitzt. Zu dieser Reaktionsmischung wird insgesamt 18,5 g (0,24 mol) Natriumsulfid in zehn gleichen Portionen mit einem zeitlichen Abstand von jeweils 10 min zugegeben. Dabei erwärmt sich die Reaktionsmischung weiter bis zum Sieden. Nach der letzten Natriumsulfidzugabe wird noch 2 h am Rückfluß erhitzt. Nach Abkühlen auf Raumtemperatur wird vom Niederschlag abfiltriert und der Filtrierrückstand 3 mal mit je 30 ml Ethanol gewaschen. Die gesammelten Filtrate werden im Rotationsverdampfer bei 110°C bis zu einem Endvakuum von 40 mbar eingeengt. Man erhält 150,7 g einer gelben Flüssigkeit, die nach ¹H-NMR-spektroskopischer Analyse einem Polysulfangemisch mit einer mittleren Polysulfankettenlänge von 2,0 entspricht. Das Produkt enthält 1,7 Gew.-% Monosulfan (δ 2,5 ppm). Ausbeute: 90 % (bezogen auf 3-Chlorpropyltriethoxysilan).

### Vergleichsbeispiel 2: Herstellung von Bis(3,3'-triethoxysilylpropyl)disulfan aus 3-Chlorpropyltriethoxysilan, Natriumtetrasulfid und Natriumsulfid

In einem 500 ml Dreihalskolben mit Rückflußkühler und Magnetrührer werden unter N₂-Schutzgas 21,8 g (0,13 mol) Natriumtetrasulfid, 19,5 g Natriumsulfid (0,25 mol)und 180,6 g (0,75 mol) 3-Chlorpropyltriethoxysilan zusammen in 180 ml Ethanol auf 50°C erhitzt. Bei dieser Temperatur wird eine Exothermie beobachtet, die das Reaktionsgemisch auf Siedetemperatur bringt. Das Reaktionsgemisch wird 2,5 h auf Siedetemperatur gehalten und anschließend auf Raumtemperatur abgekühlt. Der entstandene Niederschlag wird abfiltriert und der Filtrierrückstand 3 mal mit je 30 ml Ethanol gewaschen. Die gesammelten Filtrate werden im Rotationsverdampfer bei 110°C bis zu einem Endvakuum von 40 mbar eingeengt. Man erhält 171,4 g einer gelben Flüssigkeit, die nach ¹H-NMR-spektroskopischer Analyse einem Polysulfangemisch mit einer mittleren Polysulfankettenlänge von 2,0 entspricht. In dem Gemisch sind 39 Gew.-% Monosulfan (δ 2,5 ppm) enthalten. Ausbeute 96 % (bezogen auf 3-Chlorpropyltriethoxysilan).

### Beispiel 8: Herstellung von Bis(3,3'-triethoxysilylpropyl)-disulfan aus 3-Chlorpropyltriethoxysilan, Natriumtetrasulfid und Natriumsulfid mit portionsweiser Dosierung des Natriumsulfids

In einem 500 ml Dreihalskolben mit Rückflußkühler und Magnetrührer werden unter N₂-Schutzgas 21,8 g (0,13 mol) Natriumtetrasulfid und 180,6 g (0,78 mol) 3-Chlorpropyltriethoxysilan in 190 ml Ethanol auf 50°C erhitzt. Bei dieser Temperatur wird eine Exothermie bemerkt. Zu dem Reaktionsgemisch wird im Abstand von jeweils 5 min in zwei gleichen Portionen insgesamt 21,5 g (0,27 mol) Natriumsulfid gegeben. Bei jeder Natriumsulfid-Zugabe wird wiederum eine Erwärmung des Reaktionsgemischs bemerkt. Nach der letzten Natriumsulfid-Zugabe wird das Reaktionsgemisch noch weitere 2 h auf Siedetemperatur gehalten und anschließend auf Raumtemperatur abgekühlt. Der entstandene Niederschlag wird abfiltriert und der Filtrierrückstand 3 mal mit je 30 ml Ethanol gewaschen. Die gesammelten Filtrate werden im Rotationsverdampfer bei 110°C bis zu einem Endvakuum von 40 mbar eingeengt. Man erhält 164,5 g einer gelben Flüssigkeit, die nach ¹H-NMR-spektroskopischer Analyse einem Polysulfangemisch mit einer mittleren Polysulfankettenlänge von 2,1 entspricht. In dem Gemisch sind 7,0 Gew.-% Monosulfan (δ 2,5 ppm) enthalten. Ausbeute 92 % (bezogen auf 3-Chlorpropyltriethoxysilan).

### Beispiel 9: Herstellung von Bis(3,3'-triethoxysilylpropyl)-disulfan aus 3-Chlorpropyltriethoxysilan, Natriumtetrasulfid und Natriumsulfid mit portionsweiser Dosierung des Natriumsulfids

In einem 500 ml Dreihalskolben mit Rückflußkühler und Magnetrührer werden unter N₂-Schutzgas 21,8 g (0,13 mol) Natriumtetrasulfid und 180,6 g (0,78 mol) 3-Chlorpropyltriethoxysilan in 190 ml Ethanol auf 50°C erhitzt. Bei dieser Temperatur wird eine Exothermie bemerkt. Zu dem Reaktionsgemisch wird im Abstand von jeweils 10 min in zwei gleichen Portionen insgesamt 21,5 g (0,27 mol) Natriumsulfid gegeben. Bei jeder Natriumsulfid-Zugabe wird wiederum eine Erwärmung des Reaktionsgemischs bemerkt. Nach der letzten Natriumsulfid-Zugabe wird das Reaktionsgemisch noch weitere 2 h auf Siedetemperatur gehalten und anschließend auf Raumtemperatur abgekühlt. Der entstandene Niederschlag wird abfiltriert und der Filtrierrückstand 3 mal mit je 30 ml Ethanol gewaschen. Die gesammelten Filtrate werden im Rotationsverdampfer bei 110°C bis zu einem Endvakuum von 40 mbar eingeengt. Man erhält 158,9 g einer gelben Flüssigkeit, die nach ¹H-NMR-spektroskopischer Analyse einem Polysulfangemisch mit einer mittleren Polysulfankettenlänge von 2,1 entspricht. In dem Gemisch sind 6,5 Gew.-% Monosulfan (δ 2,5 ppm) enthalten. Ausbeute 89 % (bezogen auf 3-Chlorpropyltriethoxysilan).

### Beispiel 10: Herstellung von Bis(3,3'-triethoxysilylpropyl)disulfan aus 3-Chlorpropyltriethoxysilan, Natriumtetrasulfid und Natriumsulfid mit portionsweiser Dosierung des Natriumsulfids

In einem 500 ml Dreihalskolben mit Rückflußkühler und Magnetrührer werden unter N₂-Schutzgas 21,8 g (0,13 mol) Natriumtetrasulfid und 180,6 g (0,78 mol) 3-Chlorpropyltriethoxysilan in 190 ml Ethanol auf 50°C erhitzt. Bei dieser Temperatur wird eine Exothermie bemerkt. Zu dem Reaktionsgemisch wird im Abstand von jeweils 10 min in zwei Portionen insgesamt 21,5 g (0,27 mol) Natriumsulfid gegeben, wobei die erste Portion doppelt so groß ist wie die zweite. Bei jeder Natriumsulfid-Zugabe wird wiederum eine Erwärmung des Reaktionsgemischs bemerkt. Nach der letzten Natriumsulfid-Zugabe wird das Reaktionsgemisch noch weitere 2 h auf Siedetemperatur gehalten und anschließend auf Raumtemperatur abgekühlt. Der entstandene Niederschlag wird abfiltriert und der Filtrierrückstand 3 mal mit je 30 ml Ethanol gewaschen. Die gesammelten Filtrate werden im Rotationsverdampfer bei 110°C bis zu einem Endvakuum von 40 mbar eingeengt. Man erhält 161,2 g einer gelben Flüssigkeit, die nach ¹H-NMR-spektroskopischer Analyse einem Polysulfangemisch mit einer mittleren Polysulfankettenlänge von 2,0 entspricht. In dem Gemisch sind 7,5 Gew.-% Monosulfan (δ 2,5 ppm) enthalten. Ausbeute 91 % (bezogen auf 3-Chlorpropyltriethoxysilan).

### Beispiel 11: Herstellung von Bis(3,3'-triethoxysilylpropyl)disulfan aus 3-Chlorpropyltriethoxysilan, Natriumtetrasulfid und Natriumsulfid mit portionsweiser Dosierung des Natriumsulfids

In einem 500 ml Dreihalskolben mit Rückflußkühler und Magnetrührer werden unter N₂-Schutzgas 21,8 g (0,13 mol) Natriumtetrasulfid und 180,6 g (0,78 mol) 3-Chlorpropyltriethoxysilan in 190 ml Ethanol auf 50°C erhitzt. Bei dieser Temperatur wird eine Exothermie bemerkt. Zu dem Reaktionsgemisch wird im Abstand von jeweils 5 min in vier gleichen Portionen insgesamt 21,5 g (0,27 mol) Natriumsulfid gegeben. Bei jeder Natriumsulfid-Zugabe wird wiederum eine Erwärmung des Reaktionsgemischs bemerkt. Nach der letzten Natriumsulfid-Zugabe wird das Reaktionsgemisch noch weitere 2 h auf Siedetemperatur gehalten und anschließend auf Raumtemperatur abgekühlt. Der entstandene Niederschlag wird abfiltriert und der Filtrierrückstand 3 mal mit je 30 ml Ethanol gewaschen. Die gesammelten Filtrate werden im Rotationsverdampfer bei 110°C bis zu einem Endvakuum von 40 mbar eingeengt. Man erhält 159,8 g einer gelben Flüssigkeit, die nach ¹H-NMR-spektroskopischer Analyse einem Polysulfangemisch mit einer mittleren Polysulfankettenlänge von 2,0 entspricht. In dem Gemisch sind 3,6 Gew.-% Monosulfan (δ 2,5 ppm) enthalten. Ausbeute 90 % (bezogen auf 3-Chlorpropyltriethoxysilan).

### Beispiel 12: Herstellung von Bis (3,3'-triethoxysilylpropyl)disulfan aus 3-Chlorpropyltriethoxysilan, Natriumtetrasulfid und Natriumsulfid mit portionsweiser Dosierung des Natriumsulfids

In einem 500 ml Dreihalskolben mit Rückflußkühler und Magnetrührer werden unter N₂-Schutzgas 21,8 g (0,13 mol) Natriumtetrasulfid und 180,6 g (0,78 mol) 3-Chlorpropyltriethoxysilan in 190 ml Ethanol auf 50°C erhitzt. Bei dieser Temperatur wird eine Exothermie bemerkt. Zu dem Reaktionsgemisch wird im Abstand von jeweils 10 min in vier gleichen Portionen insgesamt 21,5 g (0,27 mol) Natriumsulfid gegeben. Bei jeder Natriumsulfid-Zugabe wird wiederum eine Erwärmung des Reaktionsgemischs bemerkt. Nach der letzten Natriumsulfid-Zugabe wird das Reaktionsgemisch noch weitere 2 h auf Siedetemperatur gehalten und anschließend auf Raumtemperatur abgekühlt. Der entstandene Niederschlag wird abfiltriert und der Filtrierrückstand 3 mal mit je 30 ml Ethanol gewaschen. Die gesammelten Filtrate werden im Rotationsverdampfer bei 110°C bis zu einem Endvakuum von 40 mbar eingeengt. Man erhält 163,2 g einer gelben Flüssigkeit, die nach ¹H-NMR-spektroskopischer Analyse einem Polysulfangemisch mit einer mittleren Polysulfankettenlänge von 2,0 entspricht. In dem Gemisch sind 3,3 Gew.-% Monosulfan (δ 2,5 ppm) enthalten. Ausbeute 92 % (bezogen auf 3-Chlorpropyltriethoxysilan).

### Beispiel 13: Herstellung von Bis(3,3'-triethoxysilylpropyl)disulfan aus 3-Chlorpropyltriethoxysilan, Natriumtetrasulfid und Natriumsulfid mit portionsweiser Dosierung des Natriumsulfids

In einem 500 ml Dreihalskolben mit Rückflußkühler und Magnetrührer werden unter N₂-Schutzgas 21,8 g (0,13 mol) Natriumtetrasulfid und 180,6 g (0,78 mol) 3-Chlorpropyltriethoxysilan in 190 ml Ethanol auf 50°C erhitzt. Bei dieser Temperatur wird eine Exothermie bemerkt. Zu dem Reaktionsgemisch wird im Abstand von jeweils 10 min in vier Portionen insgesamt 21,5 g (0,27 mol) Natriumsulfid gegeben, wobei die erste und zweite Portion doppelt so groß sind wie die weiteren. Bei jeder Natriumsulfid-Zugabe wird wiederum eine Erwärmung des Reaktionsgemischs bemerkt. Nach der letzten Natriumsulfid-Zugabe wird das Reaktionsgemisch noch weitere 2 h auf Siedetemperatur gehalten und anschließend auf Raumtemperatur abgekühlt. Der entstandene Niederschlag wird abfiltriert und der Filtrierrückstand 3 mal mit je 30 ml Ethanol gewaschen. Die gesammelten Filtrate werden im Rotationsverdampfer bei 110°C bis zu einem Endvakuum von 40 mbar eingeengt. Man erhält 159,6 g einer gelben Flüssigkeit, die nach ¹H-NMR-spektroskopischer Analyse einem Polysulfangemisch mit einer mittleren Polysulfankettenlänge von 2,0 entspricht. In dem Gemisch sind 4,1 Gew.-% Monosulfan (δ 2,5 ppm) enthalten. Ausbeute 90 % (bezogen auf 3-Chlorpropyltriethoxysilan).

### Beispiel 14: Herstellung von Bis(3,3'-triethoxysilylpropyl)disulfan aus 3-Chlorpropyltriethoxysilan, Natriumtetrasulfid und Natriumsulfid mit portionsweiser Dosierung des Natriumsulfids

In einem 500 ml Dreihalskolben mit Rückflußkühler und Magnetrührer werden unter N₂-Schutzgas 21,8 g (0,13 mol) Natriumtetrasulfid und 180,6 g (0,78 mol) 3-Chlorpropyltriethoxysilan in 190 ml Ethanol auf 50°C erhitzt. Bei dieser Temperatur wird eine Exothermie bemerkt. Zu dem Reaktionsgemisch wird im Abstand von jeweils 10 min in vier Portionen insgesamt 21,5 g (0,27 mol) Natriumsulfid gegeben, wobei die letzten beiden Portionen doppelt so groß sind wie die ersten. Bei jeder Natriumsulfid-Zugabe wird wiederum eine Erwärmung des Reaktionsgemischs bemerkt. Nach der letzten Natriumsulfid-Zugabe wird das Reaktionsgemisch noch weitere 2 h auf Siedetemperatur gehalten und anschließend auf Raumtemperatur abgekühlt. Der entstandene Niederschlag wird abfiltriert und der Filtrierrückstand 3 mal mit je 30 ml Ethanol gewaschen. Die gesammelten Filtrate werden im Rotationsverdampfer bei 110°C bis zu einem Endvakuum von 40 mbar eingeengt. Man erhält 161,4 g einer gelben Flüssigkeit, die nach ¹H-NMR-spektroskopischer Analyse einem Polysulfangemisch mit einer mittleren Polysulfankettenlänge von 2,0 entspricht. In dem Gemisch sind 4,3 Gew.-% Monosulfan (δ 2,5 ppm) enthalten. Ausbeute 91 % (bezogen auf 3-Chlorpropyltriethoxysilan).

### Beispiel 15: Herstellung von Bis(3,3'-triethoxysilylpropyl)disulfan aus 3-Chlorpropyltriethoxysilan, Natriumtetrasulfid und Natriumsulfid mit portionsweiser Dosierung des Natriumsulfids

In einem 500 ml Dreihalskolben mit Rückflußkühler und Magnetrührer werden unter N₂-Schutzgas 21,8 g (0,13 mol) Natriumtetrasulfid und 180,6 g (0,78 mol) 3-Chlorpropyltriethoxysilan in 190 ml Ethanol auf 50°C erhitzt. Bei dieser Temperatur wird eine Exothermie bemerkt. Zu dem Reaktionsgemisch wird im Abstand von jeweils 5 min in fünf gleichen Portionen insgesamt 21,5 g (0,27 mol) Natriumsulfid gegeben. Bei jeder Natriumsulfid-Zugabe wird wiederum eine Erwärmung des Reaktionsgemischs bemerkt. Nach der letzten Natriumsulfid-Zugabe wird das Reaktionsgemisch noch weitere 2 h auf Siedetemperatur gehalten und anschließend auf Raumtemperatur abgekühlt. Der entstandene Niederschlag wird abfiltriert und der Filtrierrückstand 3 mal mit je 30 ml Ethanol gewaschen. Die gesammelten Filtrate werden im Rotationsverdampfer bei 110°C bis zu einem Endvakuum von 40 mbar eingeengt. Man erhält 160,7 g einer gelben Flüssigkeit, die nach ¹H-NMR-spektroskopischer Analyse einem Polysulfangemisch mit einer mittleren Polysulfankettenlänge von 2,1 entspricht. In dem Gemisch sind 3,3 Gew.-% Monosulfan (δ 2,5 ppm) enthalten. Ausbeute 90 % (bezogen auf 3-Chlorpropyltriethoxysilan).

### Beispiel 16: Herstellung von Bis(3,3'-triethoxysilylpropyl)disulfan aus 3-Chlorpropyltriethoxysilan, Natriumtetrasulfid und Natriumsulfid mit portionsweiser Dosierung des Natriumsulfids

In einem 500 ml Dreihalskolben mit Rückflußkühler und Magnetrührer werden unter N₂-Schutzgas 21,8 g (0,13 mol) Natriumtetrasulfid und 180,6 g (0,78 mol) 3-Chlorpropyltriethoxysilan in 190 ml Ethanol auf 50°C erhitzt. Bei dieser Temperatur wird eine Exothermie bemerkt. Zu dem Reaktionsgemisch wird im Abstand von jeweils 10 min in fünf gleichen Portionen insgesamt 21,5 g (0,27 mol) Natriumsulfid gegeben. Bei jeder Natriumsulfid-Zugabe wird wiederum eine Erwärmung des Reaktionsgemischs bemerkt. Nach der letzten Natriumsulfid-Zugabe wird das Reaktionsgemisch noch weitere 2 h auf Siedetemperatur gehalten und anschließend auf Raumtemperatur abgekühlt. Der entstandene Niederschlag wird abfiltriert und der Filtrierrückstand 3 mal mit je 30 ml Ethanol gewaschen. Die gesammelten Filtrate werden im Rotationsverdampfer bei 110°C bis zu einem Endvakuum von 40 mbar eingeengt. Man erhält 157,7 g einer gelben Flüssigkeit, die nach ¹H-NMR-spektroskopischer Analyse einem Polysulfangemisch mit einer mittleren Polysulfankettenlänge von 2,0 entspricht. In dem Gemisch sind 3,2 Gew.-% Monosulfan (δ 2,5 ppm) enthalten. Ausbeute 89 % (bezogen auf 3-Chlorpropyltriethoxysilan).

### Beispiel 17: Herstellung von Bis (3,3'-triethoxysilylpropyl)disulfan aus 3-Chlorpropyltriethoxysilan, Natriumtetrasulfid und Natriumsulfid mit portionsweiser Dosierung des Natriumsulfids

In einem 500 ml Dreihalskolben mit Rückflußkühler und Magnetrührer werden unter N₂-Schutzgas 21,8 g (0,13 mol) Natriumtetrasulfid und 180,6 g (0,78 mol) 3-Chlorpropyltriethoxysilan in 190 ml Ethanol auf 50°C erhitzt. Bei dieser Temperatur wird eine Exothermie bemerkt. Zu dem Reaktionsgemisch wird im Abstand von jeweils 10 min in fünf Portionen insgesamt 21,5 g (0,27 mol) Natriumsulfid gegeben, wobei die ersten drei Portionen 80 % der Gesamtdosiermenge beinhalten. Bei jeder Natriumsulfid-Zugabe wird wiederum eine Erwärmung des Reaktionsgemischs bemerkt. Nach der letzten Natriumsulfid-Zugabe wird das Reaktionsgemisch noch weitere 2 h auf Siedetemperatur gehalten und anschließend auf Raumtemperatur abgekühlt. Der entstandene Niederschlag wird abfiltriert und der Filtrierrückstand 3 mal mit je 30 ml Ethanol gewaschen. Die gesammelten Filtrate werden im Rotationsverdampfer bei 110°C bis zu einem Endvakuum von 40 mbar eingeengt. Man erhält 163,4 g einer gelben Flüssigkeit, die nach ¹H-NMR-spektroskopischer Analyse einem Polysulfangemisch mit einer mittleren Polysulfankettenlänge von 2,0 entspricht. In dem Gemisch sind 3,4 Gew.-% Monosulfan (δ 2,5 ppm) enthalten. Ausbeute 92 % (bezogen auf 3-Chlorpropyltriethoxysilan).

### Beispiel 18: Herstellung von Bis(3,3'-triethoxysilylpropyl)disulfan aus 3-Chlorpropyltriethoxysilan, Natriumtetrasulfid und Natriumsulfid mit portionsweiser Dosierung des Natriumsulfids

In einem 500 ml Dreihalskolben mit Rückflußkühler und Magnetrührer werden unter N₂-Schutzgas 21,8 g (0,13 mol) Natriumtetrasulfid und 180,6 g (0,78 mol) 3-Chlorpropyltriethoxysilan in 190 ml Ethanol auf 50°C erhitzt. Bei dieser Temperatur wird eine Exothermie bemerkt. Zu dem Reaktionsgemisch wird im Abstand von jeweils 5 min in zehn gleichen Portionen insgesamt 21,5 g (0,27 mol) Natriumsulfid gegeben. Bei jeder Natriumsulfid-Zugabe wird wiederum eine Erwärmung des Reaktionsgemischs bemerkt. Nach der letzten Natriumsulfid-Zugabe wird das Reaktionsgemisch noch weitere 2 h auf Siedetemperatur gehalten und anschließend auf Raumtemperatur abgekühlt. Der entstandene Niederschlag wird abfiltriert und der Filtrierrückstand 3 mal mit je 30 ml Ethanol gewaschen. Die gesammelten Filtrate werden im Rotationsverdampfer bei 110°C bis zu einem Endvakuum von 40 mbar eingeengt. Man erhält 163,0 g einer gelben Flüssigkeit, die nach ¹H-NMR-spektroskopischer Analyse einem Polysulfangemisch mit einer mittleren Polysulfankettenlänge von 2,0 entspricht. In dem Gemisch sind 2,8 Gew.-% Monosulfan (δ 2,5 ppm) enthalten. Ausbeute 92 % (bezogen auf 3-Chlorpropyltriethoxysilan).

### Beispiel 19: Herstellung von Bis(3,3'-triethoxysilylpropyl)disulfan aus 3-Chlorpropyltriethoxysilan, Natriumtetrasulfid und Natriumsulfid mit portionsweiser Dosierung des Natriumsulfids

In einem 500 ml Dreihalskolben mit Rückflußkühler und Magnetrührer werden unter N₂-Schutzgas 21,8 g (0,13 mol) Natriumtetrasulfid und 180,6 g (0,78 mol) 3-Chlorpropyltriethoxysilan in 190 ml Ethanol auf 50°C erhitzt. Bei dieser Temperatur wird eine Exothermie bemerkt. Zu dem Reaktionsgemisch wird im Abstand von jeweils 10 min in zehn gleichen Portionen insgesamt 21,5 g (0,27 mol) Natriumsulfid gegeben. Bei jeder Natriumsulfid-Zugabe wird wiederum eine Erwärmung des Reaktionsgemischs bemerkt. Nach der letzten Natriumsulfid-Zugabe wird das Reaktionsgemisch noch weitere 2 h auf Siedetemperatur gehalten und anschließend auf Raumtemperatur abgekühlt. Der entstandene Niederschlag wird abfiltriert und der Filtrierrückstand 3 mal mit je 30 ml Ethanol gewaschen. Die gesammelten Filtrate werden im Rotationsverdampfer bei 110°C bis zu einem Endvakuum von 40 mbar eingeengt. Man erhält 162,7 g einer gelben Flüssigkeit, die nach ¹H-NMR-spektroskopischer Analyse einem Polysulfangemisch mit einer mittleren Polysulfankettenlänge von 2,1 entspricht. In dem Gemisch sind 2,9 Gew.-% Monosulfan (δ 2,5 ppm) enthalten. Ausbeute 91 % (bezogen auf 3-Chlorpropyltriethoxysilan).

### Beispiel 20: Herstellung von Bis (3,3'-triethoxysilylpropyl)disulfan aus 3-Chlorpropyltriethoxysilan, Natriumtetrasulfid und Natriumsulfid mit portionsweiser Dosierung des Natriumsulfids

In einem 500 ml Dreihalskolben mit Rückflußkühler und Magnetrührer werden unter N₂-Schutzgas 21,8 g (0,13 mol) Natriumtetrasulfid und 180,6 g (0,78 mol) 3-Chlorpropyltriethoxysilan in 190 ml Ethanol auf 50°C erhitzt. Bei dieser Temperatur wird eine Exothermie bemerkt. Zu dem Reaktionsgemisch wird im Abstand von jeweils 10 min in zehn Portionen insgesamt 21,5 g (0,27 mol) Natriumsulfid gegeben, wobei die ersten fünf Portionen 66 % der Gesamtmenge enthalten. Bei jeder Natriumsulfid-Zugabe wird wiederum eine Erwärmung des Reaktionsgemischs bemerkt. Nach der letzten Natriumsulfid-Zugabe wird das Reaktionsgemisch noch weitere 2 h auf Siedetemperatur gehalten und anschließend auf Raumtemperatur abgekühlt. Der entstandene Niederschlag wird abfiltriert und der Filtrierrückstand 3 mal mit je 30 ml Ethanol gewaschen. Die gesammelten Filtrate werden im Rotationsverdampfer bei 110°C bis zu einem Endvakuum von 40 mbar eingeengt. Man erhält 161,1 g einer gelben Flüssigkeit, die nach ¹H-NMR-spektroskopischer Analyse einem Polysulfangemisch mit einer mittleren Polysulfankettenlänge von 2,1 entspricht. In dem Gemisch sind 3,1 Gew.-% Monosulfan (δ 2,5 ppm) enthalten. Ausbeute 90 % (bezogen auf 3-Chlorpropyltriethoxysilan).

### Vergleichsbeispiel 3: Herstellung von Bis(3,3'-triethoxysilylpropyl)disulfan aus 3-Chlorpropyltriethoxysilan, Natriumtetrasulfid und Natriumsulfid

In einem 500 ml Dreihalskolben mit Rückflußkühler, Tropftrichter und Magnetrührer werden unter N₂-Schutzgas 21,8 g (0,13 mol) Natriumtetrasulfid und 19,5 g Natriumsulfid (0,25 mol)in 180 ml Ethanol unter Rühren vorgelegt und auf 50°C angeheizt. Bei dieser Temperatur wird innherhalb von 20 min 180,6 g (0,75 mol) 3-Chlorpropyltriethoxysilan zugetropft. Dabei steigt die Temperatur des Reaktionsgemischs auf Siedetemperatur an.

Das Reaktionsgemisch wird 2,5 h auf Siedetemperatur gehalten und anschließend auf Raumtemperatur abgekühlt. Der entstandene Niederschlag wird abfiltriert und der Filtrierrückstand 3 mal mit 30 ml Ethanol gewaschen. Die gesammelten Filtrate werden im Rotationsverdampfer bei 110°C bis zu einem Endvakuum von 40 mbar eingeengt. Man erhält 170,2 g einer gelben Flüssigkeit, die nach ¹H-NMRspektroskopischer Analyse einem Polysulfangemisch mit einer mittleren Polysulfankettenlänge von 2,1 entspricht. In dem Gemisch sind 27 Gew.-% Monosulfan (δ 2,5 ppm) enthalten. Ausbeute 95 % (bezogen auf 3-Chlorpropyltriethoxysilan).

### Beispiel 21: Herstellung von Bis(3,3`-triethoxysilylpropyl)disulfan aus 3-Chlorpropyltriethoxysilan, Natriumtrisulfid und Natriumsulfid mit portionsweiser Dosierung des Natriumsulfids

In einem 500 ml Dreihalskolben mit Rückflußkühler und Magnetrührer werden unter N₂-Schutzgas 17,8 g (0,13 mol) Natriumtrisulfid und 120,4 g (0,5 mol) 3-Chlorpropyltriethoxysilan in 190 ml Ethanol auf 50°C erhitzt. Bei dieser Temperatur wird eine Exothermie bemerkt. Zu dem Reaktionsgemisch wird im Abstand von jeweils 5 min in zwei gleichen Portionen insgesamt 9,8 g (0,13 mol) Natriumsulfid gegeben. Bei jeder Natriumsulfid-Zugabe wird wiederum eine Erwärmung des Reaktionsgemischs bemerkt. Nach der letzten Natriumsulfid-Zugabe wird das Reaktionsgemisch noch weitere 2 h auf Siedetemperatur gehalten und anschließend auf Raumtemperatur abgekühlt. Der entstandene Niederschlag wird abfiltriert und der Filtrierrückstand 3 mal mit je 30 ml Ethanol gewaschen. Die gesammelten Filtrate werden im Rotationsverdampfer bei 110°C bis zu einem Endvakuum von 40 mbar eingeengt. Man erhält 114,6 g einer gelben Flüssigkeit, die nach ¹H-NMR-spektroskopischer Analyse einem Polysulfangemisch mit einer mittleren Polysulfankettenlänge von 2,0 entspricht. In dem Gemisch sind 5,5 Gew.-% Monosulfan (δ 2,5 ppm) enthalten. Ausbeute 96 % (bezogen auf 3-Chlorpropyltriethoxysilan).

### Beispiel 22: Herstellung von Bis(3,3'-triethoxysilylpropyl)disulfan aus 3-Chlorpropyltriethoxysilan, Natriumtrisulfid und Natriumsulfid mit portionsweiser Dosierung des Natriumsulfids

In einem 500 ml Dreihalskolben mit Rückflußkühler und Magnetrührer werden unter N₂-Schutzgas 17,8 g (0,13 mol) Natriumtrisulfid und 120,4 g (0,5 mol) 3-Chlorpropyltriethoxysilan in 190 ml Ethanol auf 50°C erhitzt. Bei dieser Temperatur wird eine Exothermie bemerkt. Zu dem Reaktionsgemisch wird im Abstand von jeweils 10 min in zwei gleichen Portionen insgesamt 9,8 g (0,13 mol) Natriumsulfid gegeben. Bei jeder Natriumsulfid-Zugabe wird wiederum eine Erwärmung des Reaktionsgemischs bemerkt. Nach der letzten Natriumsulfid-Zugabe wird das Reaktionsgemisch noch weitere 2 h auf Siedetemperatur gehalten und anschließend auf Raumtemperatur abgekühlt. Der entstandene Niederschlag wird abfiltriert und der Filtrierrückstand 3 mal mit je 30 ml Ethanol gewaschen. Die gesammelten Filtrate werden im Rotationsverdampfer bei 110°C bis zu einem Endvakuum von 40 mbar eingeengt. Man erhält 117,8 g einer gelben Flüssigkeit, die nach ¹H-NMR-spektroskopischer Analyse einem Polysulfangemisch mit einer mittleren Polysulfankettenlänge von 2,1 entspricht. In dem Gemisch sind 5,1 Gew.-% Monosulfan (δ 2,5 ppm) enthalten. Ausbeute 98 % (bezogen auf 3-Chlorpropyltriethoxysilan).

### Beispiel 23: Herstellung von Bis (3,3'-triethoxysilylpropyl) disulfan aus 3-Chlorpropyltriethoxysilan, Natriumtrisulfid und Natriumsulfid mit portionsweiser Dosierung des Natriumsulfids

In einem 500 ml Dreihalskolben mit Rückflußkühler und Magnetrührer werden unter N₂-Schutzgas 17,8 g (0,13 mol) Natriumtrisulfid und 120,4 g (0,5 mol) 3-Chlorpropyltriethoxysilan in 190 ml Ethanol auf 50°C erhitzt. Bei dieser Temperatur wird eine Exothermie bemerkt. Zu dem Reaktionsgemisch wird im Abstand von jeweils 5 min in vier gleichen Portionen insgesamt 9,8 g (0,13 mol) Natriumsulfid gegeben. Bei jeder Natriumsulfid-Zugabe wird wiederum eine Erwärmung des Reaktionsgemischs bemerkt. Nach der letzten Natriumsulfid-Zugabe wird das Reaktionsgemisch noch weitere 2 h auf Siedetemperatur gehalten und anschließend auf Raumtemperatur abgekühlt. Der entstandene Niederschlag wird abfiltriert und der Filtrierrückstand 3 mal mit je 30 ml Ethanol gewaschen. Die gesammelten Filtrate werden im Rotationsverdampfer bei 110°C bis zu einem Endvakuum von 40 mbar eingeengt. Man erhält 116,7 g einer gelben Flüssigkeit, die nach ¹H-NMR-spektroskopischer Analyse einem Polysulfangemisch mit einer mittleren Polysulfankettenlänge von 2,1 entspricht. In dem Gemisch sind 2,1 Gew.-% Monosulfan (δ 2,5 ppm) enthalten. Ausbeute 97 % (bezogen auf 3-Chlorpropyltriethoxysilan).

### Beispiel 24: Herstellung von Bis(3,3'-triethoxysilylpropyl)disulfan aus 3-Chlorpropyltriethoxysilan, Natriumtrisulfid und Natriumsulfid mit portionsweiser Dosierung des Natriumsulfids

In einem 500 ml Dreihalskolben mit Rückflußkühler und Magnetrührer werden unter N₂-Schutzgas 17,8 g (0,13 mol) Natriumtrisulfid und 120,4 g (0,5 mol) 3-Chlorpropyltriethoxysilan in 190 ml Ethanol auf 50°C erhitzt. Bei dieser Temperatur wird eine Exothermie bemerkt. Zu dem Reaktionsgemisch wird im Abstand von jeweils 10 min in vier gleichen Portionen insgesamt 9,8 g (0,13 mol) Natriumsulfid gegeben. Bei jeder Natriumsulfid-Zugabe wird wiederum eine Erwärmung des Reaktionsgemischs bemerkt. Nach der letzten Natriumsulfid-Zugabe wird das Reaktionsgemisch noch weitere 2 h auf Siedetemperatur gehalten und anschließend auf Raumtemperatur abgekühlt. Der entstandene Niederschlag wird abfiltriert und der Filtrierrückstand 3 mal mit je 30 ml Ethanol gewaschen. Die gesammelten Filtrate werden im Rotationsverdampfer bei 110°C bis zu einem Endvakuum von 40 mbar eingeengt. Man erhält 118,9 g einer gelben Flüssigkeit, die nach ¹H-NMR-spektroskopischer Analyse einem Polysulfangemisch mit einer mittleren Polysulfankettenlänge von 2,1 entspricht. In dem Gemisch sind 1,9 Gew.-% Monosulfan (δ 2,5 ppm) enthalten. Ausbeute 99 % (bezogen auf 3-Chlorpropyltriethoxysilan)

### Beispiel 25: Herstellung von Bis (3,3'-triethoxysilylpropyl)disulfan aus 3-Chlorpropyltriethoxysilan, Natriumtrisulfid und Natriumsulfid mit portionsweiser Dosierung des Natriumsulfids

In einem 500 ml Dreihalskolben mit Rückflußkühler und Magnetrührer werden unter N₂-Schutzgas 17,8 g (0,13 mol) Natriumtrisulfid und 120,4 g (0,5 mol) 3-Chlorpropyltriethoxysilan in 190 ml Ethanol auf 50°C erhitzt. Bei dieser Temperatur wird eine Exothermie bemerkt. Zu dem Reaktionsgemisch wird im Abstand von jeweils 10 min in vier Portionen insgesamt 9,8 g (0,13 mol) Natriumsulfid gegeben, wobei die ersten beiden Portionen doppelt so groß sind wie die restlichen. Bei jeder Natriumsulfid-Zugabe wird wiederum eine Erwärmung des Reaktionsgemischs bemerkt. Nach der letzten Natriumsulfid-Zugabe wird das Reaktionsgemisch noch weitere 2 h auf Siedetemperatur gehalten und anschließend auf Raumtemperatur abgekühlt. Der entstandene Niederschlag wird abfiltriert und der Filtrierrückstand 3 mal mit je 30 ml Ethanol gewaschen. Die gesammelten Filtrate werden im Rotationsverdampfer bei 110°C bis zu einem Endvakuum von 40 mbar eingeengt. Man erhält 115,8 g einer gelben Flüssigkeit, die nach ¹H-NMR-spektroskopischer Analyse einem Polysulfangemisch mit einer mittleren Polysulfankettenlänge von 2,0 entspricht. In dem Gemisch sind 2,2 Gew.-% Monosulfan (δ 2,5 ppm) enthalten. Ausbeute 98 % (bezogen auf 3-Chlorpropyltriethoxysilan).

### Beispiel 26: Herstellung von Bis(3,3'-triethoxysilylpropyl)disulfan aus 3-Chlorpropyltriethoxysilan, Natriumtrisulfid und Natriumsulfid mit portionsweiser Dosierung des Natriumsulfids

In einem 500 ml Dreihalskolben mit Rückflußkühler und Magnetrührer werden unter N₂-Schutzgas 17,8 g (0,13 mol) Natriumtrisulfid und 120,4 g (0,5 mol) 3-Chlorpropyltriethoxysilan in 190 ml Ethanol auf 50°C erhitzt. Bei dieser Temperatur wird eine Exothermie bemerkt. Zu dem Reaktionsgemisch wird im Abstand von jeweils 10 min in vier Portionen insgesamt 9,8 g (0,13 mol) Natriumsulfid gegeben, wobei die letzten beiden Dosierungen doppelt so groß wie die ersten sind. Bei jeder Natriumsulfid-Zugabe wird wiederum eine Erwärmung des Reaktionsgemischs bemerkt. Nach der letzten Natriumsulfid-Zugabe wird das Reaktionsgemisch noch weitere 2 h auf Siedetemperatur gehalten und anschließend auf Raumtemperatur abgekühlt. Der entstandene Niederschlag wird abfiltriert und der Filtrierrückstand 3 mal mit je 30 ml Ethanol gewaschen. Die gesammelten Filtrate werden im Rotationsverdampfer bei 110°C bis zu einem Endvakuum von 40 mbar eingeengt. Man erhält 114,3 g einer gelben Flüssigkeit, die nach ¹H-NMR-spektroskopischer Analyse einem Polysulfangemisch mit einer mittleren Polysulfankettenlänge von 2,1 entspricht. In dem Gemisch sind 2,4 Gew.-% Monosulfan (δ 2,5 ppm) enthalten. Ausbeute 95 % (bezogen auf 3-Chlorpropyltriethoxysilan).

### Beispiel 27: Herstellung von Bis(3,3'-triethoxysilylpropyl)disulfan aus 3-Chlorpropyltriethoxysilan, Natriumtrisulfid und Natriumsulfid mit portionsweiser Dosierung des Natriumsulfids

In einem 500 ml Dreihalskolben mit Rückflußkühler und Magnetrührer werden unter N₂-Schutzgas 17,8 g (0,13 mol) Natriumtrisulfid und 120,4 g (0,5 mol) 3-Chlorpropyltriethoxysilan in 190 ml Ethanol auf 50°C erhitzt. Bei dieser Temperatur wird eine Exothermie bemerkt. Zu dem Reaktionsgemisch wird im Abstand von jeweils 5 min in fünf gleichen Portionen insgesamt 9,8 g (0,13 mol) Natriumsulfid gegeben. Bei jeder Natriumsulfid-Zugabe wird wiederum eine Erwärmung des Reaktionsgemischs bemerkt. Nach der letzten Natriumsulfid-Zugabe wird das Reaktionsgemisch noch weitere 2 h auf Siedetemperatur gehalten und anschließend auf Raumtemperatur abgekühlt. Der entstandene Niederschlag wird abfiltriert und der Filtrierrückstand 3 mal mit je 30 ml Ethanol gewaschen. Die gesammelten Filtrate werden im Rotationsverdampfer bei 110°C bis zu einem Endvakuum von 40 mbar eingeengt. Man erhält 115,4 g einer gelben Flüssigkeit, die nach ¹H-NMR-spektroskopischer Analyse einem Polysulfangemisch mit einer mittleren Polysulfankettenlänge von 2,1 entspricht. In dem Gemisch sind 1,9 Gew.-% Monosulfan (δ 2,5 ppm) enthalten. Ausbeute 96 % (bezogen auf 3-Chlorpropyltriethoxysilan).

### Beispiel 28: Herstellung von Bis(3,3'-triethoxysilylpropyl)disulfan aus 3-Chlorpropyltriethoxysilan, Natriumtrisulfid und Natriumsulfid mit portionsweiser Dosierung des Natriumsulfids

In einem 500 ml Dreihalskolben mit Rückflußkühler und Magnetrührer werden unter N₂-Schutzgas 17,8 g (0,13 mol) Natriumtrisulfid und 120,4 g (0,5 mol) 3-Chlorpropyltriethoxysilan in 190 ml Ethanol auf 50°C erhitzt. Bei dieser Temperatur wird eine Exothermie bemerkt. Zu dem Reaktionsgemisch wird im Abstand von jeweils 10 min in fünf gleichen Portionen insgesamt 9,8 g (0,13 mol) Natriumsulfid gegeben. Bei jeder Natriumsulfid-Zugabe wird wiederum eine Erwärmung des Reaktionsgemischs bemerkt. Nach der letzten Natriumsulfid-Zugabe wird das Reaktionsgemisch noch weitere 2 h auf Siedetemperatur gehalten und anschließend auf Raumtemperatur abgekühlt. Der entstandene Niederschlag wird abfiltriert und der Filtrierrückstand 3 mal mit je 30 ml Ethanol gewaschen. Die gesammelten Filtrate werden im Rotationsverdampfer bei 110°C bis zu einem Endvakuum von 40 mbar eingeengt. Man erhält 116,0 g,einer gelben Flüssigkeit, die nach ¹H-NMR-spektroskopischer Analyse einem Polysulfangemisch mit einer mittleren Polysulfankettenlänge von 2,0 entspricht. In dem Gemisch sind 1,6 Gew.-% Monosulfan (δ 2,5 ppm) enthalten. Ausbeute 98 % (bezogen auf 3-Chlorpropyltriethoxysilan).

### Beispiel 29: Herstellung von Bis (3,3'-triethoxysilylpropyl)disulfan aus 3-Chlorpropyltriethoxysilan, Natriumtrisulfid und Natriumsulfid mit portionsweiser Dosierung des Natriumsulfids

In einem 500 ml Dreihalskolben mit Rückflußkühler und Magnetrührer werden unter N₂-Schutzgas 17,8 g (0,13 mol) Natriumtrisulfid und 120,4 g (0,5 mol) 3-Chlorpropyltriethoxysilan in 190 ml Ethanol auf 50°C erhitzt. Bei dieser Temperatur wird eine Exothermie bemerkt. Zu dem Reaktionsgemisch wird im Abstand von jeweils 10 min in fünf Portionen insgesamt 9,8 g (0,13 mol) Natriumsulfid gegeben, wobei die ersten beiden Dosierungen 60 % der Gesamtmenge entsprechen. Bei jeder Natriumsulfid-Zugabe wird wiederum eine Erwärmung des Reaktionsgemischs bemerkt. Nach der letzten Natriumsulfid-Zugabe wird das Reaktionsgemisch noch weitere 2 h auf Siedetemperatur gehalten und anschließend auf Raumtemperatur abgekühlt. Der entstandene Niederschlag wird abfiltriert und der Filtrierrückstand 3 mal mit je 30 ml Ethanol gewaschen. Die gesammelten Filtrate werden im Rotationsverdampfer bei 110°C bis zu einem Endvakuum von 40 mbar eingeengt. Man erhält 116,0 g einer gelben Flüssigkeit, die nach ¹H-NMR-spektroskopischer Analyse einem Polysulfangemisch mit einer mittleren Polysulfankettenlänge von 2,0 entspricht. In dem Gemisch sind 2,0 Gew.-% Monosulfan (δ 2,5 ppm) enthalten. Ausbeute 97 % (bezogen auf 3-Chlorpropyltriethoxysilan).

### Beispiel 30: Herstellung von Bis(3,3'-triethoxysilylpropyl)disulfan aus 3-Chlorpropyltriethoxysilan, Natriumtrisulfid und Natriumsulfid mit portionsweiser Dosierung des Natriumsulfids

In einem 500 ml Dreihalskolben mit Rückflußkühler und Magnetrührer werden unter N₂-Schutzgas 17,8 g (0,13 mol) Natriumtrisulfid und 120,4 g (0,5 mol) 3-Chlorpropyltriethoxysilan in 190 ml Ethanol auf 50°C erhitzt. Bei dieser Temperatur wird eine Exothermie bemerkt. Zu dem Reaktionsgemisch wird im Abstand von jeweils 10 min in fünf Portionen insgesamt 9,8 g (0,13 mol) Natriumsulfid gegeben, wobei die letzten beiden Dosierungen 60 % der Gesamtdosiermenge beinhalten. Bei jeder Natriumsulfid-Zugabe wird wiederum eine Erwärmung des Reaktionsgemischs bemerkt. Nach der letzten Natriumsulfid-Zugabe wird das Reaktionsgemisch noch weitere 2 h auf Siedetemperatur gehalten und anschließend auf Raumtemperatur abgekühlt. Der entstandene Niederschlag wird abfiltriert und der Filtrierrückstand 3 mal mit je 30 ml Ethanol gewaschen. Die gesammelten Filtrate werden im Rotationsverdampfer bei 110°C bis zu einem Endvakuum von 40 mbar eingeengt. Man erhält 117,6 g einer gelben Flüssigkeit, die nach ¹H-NMR-spektroskopischer Analyse einem Polysulfangemisch mit einer mittleren Polysulfankettenlänge von 2,1 entspricht. In dem Gemisch sind 2,2 Gew.-% Monosulfan (δ 2,5 ppm) enthalten. Ausbeute 98 % (bezogen auf 3-Chlorpropyltriethoxysilan).

### Beispiel 31: Herstellung von Bis(3,3'-triethoxysilylpropyl)disulfan aus 3-Chlorpropyltriethoxysilan, Natriumtrisulfid und Natriumsulfid mit portionsweiser Dosierung des Natriumsulfids

In einem 500 ml Dreihalskolben mit Rückflußkühler und Magnetrührer werden unter N₂-Schutzgas 17,8 g (0,13 mol) Natriumtrisulfid und 120,4 g (0,5 mol) 3-Chlorpropyltriethoxysilan in 190 ml Ethanol auf 50°C erhitzt. Bei dieser Temperatur wird eine Exothermie bemerkt. Zu dem Reaktionsgemisch wird im Abstand von jeweils 5 min in zehn gleichen Portionen insgesamt 9,8 g (0,13 mol) Natriumsulfid gegeben. Bei jeder Natriumsulfid-Zugabe wird wiederum eine Erwärmung des Reaktionsgemischs bemerkt. Nach der letzten Natriumsulfid-Zugabe wird das Reaktionsgemisch noch weitere 2 h auf Siedetemperatur gehalten und anschließend auf Raumtemperatur abgekühlt. Der entstandene Niederschlag wird abfiltriert und der Filtrierrückstand 3 mal mit je 30 ml Ethanol gewaschen. Die gesammelten Filtrate werden im Rotationsverdampfer bei 110°C bis zu einem Endvakuum von 40 mbar eingeengt. Man erhält 112,1 g einer gelben Flüssigkeit, die nach ¹H-NMR-spektroskopischer Analyse einem Polysulfangemisch mit einer mittleren Polysulfankettenlänge von 2,0 entspricht. In dem Gemisch sind 1,7 Gew.-% Monosulfan (δ 2,5 ppm) enthalten. Ausbeute 94 % (bezogen auf 3-Chlorpropyltriethoxysilan)

### Beispiel 32: Herstellung von Bis(3,3'-triethoxysilylpropyl)disulfan aus 3-Chlorpropyltriethoxysilan, Natriumtrisulfid und Natriumsulfid mit portionsweiser Dosierung des Natriumsulfids

In einem 500 ml Dreihalskolben mit Rückflußkühler und Magnetrührer werden unter N₂-Schutzgas 17,8 g (0,13 mol) Natriumtrisulfid und 120,4 g (0,5 mol) 3-Chlorpropyltriethoxysilan in 190 ml Ethanol auf 50°C erhitzt. Bei dieser Temperatur wird eine Exothermie bemerkt. Zu dem Reaktionsgemisch wird im Abstand von jeweils 10 min in zehn gleichen Portionen insgesamt 9,8 g (0,13 mol) Natriumsulfid gegeben. Bei jeder Natriumsulfid-Zugabe wird wiederum eine Erwärmung des Reaktionsgemischs bemerkt. Nach der letzten Natriumsulfid-Zugabe wird das Reaktionsgemisch noch weitere 2 h auf Siedetemperatur gehalten und anschließend auf Raumtemperatur abgekühlt. Der entstandene Niederschlag wird abfiltriert und der Filtrierrückstand 3 mal mit je 30 ml Ethanol gewaschen. Die gesammelten Filtrate werden im Rotationsverdampfer bei 110°C bis zu einem Endvakuum von 40 mbar eingeengt. Man erhält 111,2 g einer gelben Flüssigkeit, die nach ¹H-NMR-spektroskopischer Analyse einem Polysulfangemisch mit einer mittleren Polysulfankettenlänge von 2,0 entspricht. In dem Gemisch sind 1,4 Gew.-% Monosulfan (δ 2,5 ppm) enthalten. Ausbeute 93 % (bezogen auf 3-Chlorpropyltriethoxysilan).

### Beispiel 33: Herstellung von Bis(3,3'-triethoxysilylpropyl)disulfan aus 3-Chlorpropyltriethoxysilan, Natriumtrisulfid und Natriumsulfid mit portionsweiser Dosierung des Natriumsulfids

In einem 500 ml Dreihalskolben mit Rückflußkühler und Magnetrührer werden unter N₂-Schutzgas 17,8 g (0,13 mol) Natriumtrisulfid und 120,4 g (0,5 mol) 3-Chlorpropyltriethoxysilan in 190 ml Ethanol auf 50°C erhitzt. Bei dieser Temperatur wird eine Exothermie bemerkt. Zu dem Reaktionsgemisch wird im Abstand von jeweils 10 min in zehn Portionen insgesamt 9,8 g (0,13 mol) Natriumsulfid gegeben wobei die ersten fünf Dosierungen insgesamt 66 % der Gesamtmenge beinhalten. Bei jeder Natriumsulfid-Zugabe wird wiederum eine Erwärmung des Reaktionsgemischs bemerkt. Nach der letzten Natriumsulfid-Zugabe wird das Reaktionsgemisch noch weitere 2 h auf Siedetemperatur gehalten und anschließend auf Raumtemperatur abgekühlt. Der entstandene Niederschlag wird abfiltriert und der Filtrierrückstand 3 mal mit je 30 ml Ethanol gewaschen. Die gesammelten Filtrate werden im Rotationsverdampfer bei 110°C bis zu einem Endvakuum von 40 mbar eingeengt. Man erhält 112,5 g einer gelben Flüssigkeit, die nach ¹H-NMR-spektroskopischer Analyse einem Polysulfangemisch mit einer mittleren Polysulfankettenlänge von 2,0 entspricht. In dem Gemisch sind 1,6 Gew.-% Monosulfan (δ 2,5 ppm) enthalten. Ausbeute 94 % (bezogen auf 3-Chlorpropyltriethoxysilan).

### Beispiel 34: Herstellung von Bis(3,3'-triethoxysilylpropyl)disulfan aus 3-Chlorpropyltriethoxysilan, Natriumtrisulfid und Natriumsulfid mit portionsweiser Dosierung des Natriumsulfids

In einem 500 ml Dreihalskolben mit Rückflußkühler und Magnetrührer werden unter N₂-Schutzgas 17,8 g (0,13 mol) Natriumtrisulfid und 120,4 g (0,5 mol) 3-Chlorpropyltriethoxysilan in 190 ml Ethanol auf 50°C erhitzt. Bei dieser Temperatur wird eine Exothermie bemerkt. Zu dem Reaktionsgemisch wird im Abstand von jeweils 10 min in zehn Portionen insgesamt 9,8 g (0,13 mol) Natriumsulfid gegeben, wobei die letzten fünf Dosierungen insgesamt 66 % der Gesamtmenge beinhalten. Bei jeder Natriumsulfid-Zugabe wird wiederum eine Erwärmung des Reaktionsgemischs bemerkt. Nach der letzten Natriumsulfid-Zugabe wird das Reaktionsgemisch noch weitere 2 h auf Siedetemperatur gehalten und anschließend auf Raumtemperatur abgekühlt. Der entstandene Niederschlag wird abfiltriert und der Filtrierrückstand 3 mal mit je 30 ml Ethanol gewaschen. Die gesammelten Filtrate werden im Rotationsverdampfer bei 110°C bis zu einem Endvakuum von 40 mbar eingeengt. Man erhält 114,3 g einer gelben Flüssigkeit, die nach ¹H-NMR-spektroskopischer Analyse einem Polysulfangemisch mit einer mittleren Polysulfankettenlänge von 2,1 entspricht. In dem Gemisch sind 1,8 Gew.-% Monosulfan (δ 2,5 ppm) enthalten. Ausbeute 95 % (bezogen auf 3-Chlorpropyltriethoxysilan).

## Patentansprüche

1. Verfahren zur Herstellung von Organosilylalkylpolysulfanen der allgemeinen Formel I
(R¹R²R³SiR⁴)₂Sₓ (I)
in der bedeuten
R¹, R², R³: gleich oder verschieden voneinander, verzweigte und unverzweigte Alkyl- und/oder Alkoxygruppen mit einer Kettenlänge von 1 - 8 C-Atomen, Arylreste, wobei mindestens eine Alkoxygruppe vorhanden ist,
R⁴ zweiwertiger Alkylenrest mit einer Kettenlänge von 1 - 8 C-Atomen, oder
-(CH₂)ₙ-C₆H₄-(CH₂)ₙ- mit n = 1 - 4,
x: Zahl ≥ 1,
**dadurch gekennzeichnet, daß** man Organosilylalkylpolysulfane der allgemeinen Formel II
(R¹R²R³SiR⁴)₂S_{y} (II)
in der
R¹, R², R³ und R⁴ die oben angegebene Bedeutung besitzen und
y : Zahl > x,
mit einem ionischen Sulfid der allgemeinen Formel III
M⁺₂S²⁻ (III)
in der M⁺ für ein Alkalimetallkation, ein Ammoniumion, ein halbes Erdalkalimetallkation oder ein halbes Zinkkation steht,
und einem Organosilylalkylhalogenid der allgemeinen Formel
R¹R²R³SiR⁴X (IV)
in der
R¹, R², R³ und R⁴ die oben angegebene Bedeutung besitzen und
X : Chlor, Brom oder Jod ist,
umsetzt, wobei das langkettige Organosilylalkylpolysulfan der allgemeinen Formel (II) und das Organosilylalkylhalogenid der allgemeinen Formel (IV) vorgelegt werden und zu dieser Lösung das ionische Sulfid der allgemeinen Formel (III) in mehreren Portionen zugegeben wird.

2. Verfahren zur Herstellung von Organosilylalkylpolysulfanen nach Anspruch 1, **dadurch gekennzeichnet, daß** man die Reaktion zwischen RT und 200°C durchführt.

3. Verfahren zur Herstellung von Organosilylalkylpolysulfanen nach Anspruch 1, **dadurch gekennzeichnet, daß** man das Organosilylalkylpolysulfan der allgemeinen Formel II bereits bei seiner Entstehung aus einem Organosilylalkylhalogenid der allgemeinen Formel IV und einem ionischen Polysulfid der allgemeinen Formel V
M⁺₂S_{y}²⁻ (V)
in der M⁺ und y die oben angegebenen Bedeutung haben, in situ, mit dem ionischen Sulfid der allgemeinen Formel III und dem Organosilylalkylhalogenid der allgemeinen Formel IV umsetzt.

## Claims

1. Process for the preparation of organosilylalkylpolysulphanes of the general formula I
(R¹R²R³SiR⁴)₂Sₓ (I)
in which
R¹, R², R³, which are identical or different from one another, denote branched and unbranched alkyl and/or alkoxy groups having a chain length of 1-8 C atoms, aryl radicals, at least one alkoxy group being present,
R⁴ denotes a divalent alkylene radical having a chain length of 1-8 C atoms, or
- (CH₂)ₙ-C₆H₄-(CH₂)ₙ- where n=1-4,
x denotes a number ≥ 1,
**characterized in that** organosilylalkylpolysulphanes of the general formula II
(R¹R²R³SiR⁴)₂S_{y} (II)
in which
R¹, R², R³ and R⁴ have the abovementioned meaning and
y is a number >x,
are reacted with an ionic sulphide of the general formula (III)
M⁺₂ S²⁻ (III)
in which M⁺ represents an alkali metal cation, an ammonium ion, half an alkaline earth metal cation or half a zinc cation,
and an organosilylalkyl halide of the general formula
R¹R²R³SiR⁴X (IV)
in which
R¹, R², R³ and R⁴ have the abovementioned meaning and
X is chlorine, bromine or iodine,
the long-chain organosilylalkylpolysulphane of the general formula (II) and the organosilylalkyl halide of the general formula (IV) being initially introduced into the reaction vessel and the ionic sulphide of the general formula (III) being added to this solution in several portions.

2. Process for the preparation of organosilylalkylpolysulphanes according to Claim 1, **characterized in that** the reaction is carried out at between RT and 200°C.

3. Process for the preparation of organosilylalkylpolysulphanes according to Claim 1, **characterized in that** the organosilylalkylpolysulphane of the general formula II is already reacted with the ionic sulphide of the general formula III and the organosilylalkyl halide of the general formula IV in situ during its formation from an organosilylalkyl halide of the general formula IV and an ionic polysulphide of the general formula V
M⁺₂S_{y}²⁻ (V)
in which M⁺ and y have the abovementioned meaning.

## Revendications

1. Procédé pour la préparation d'organosilylalkyl-polysulfanes de formule générale I
(R¹R²R³SiR⁴)₂Sₓ (I)
dans laquelle
R¹, R² , R³ représentent, identiques ou chacun différent des autres, des groupes alkyle et/ou alcoxy ramifiés ou non ramifiés, ayant une longueur de chaîne de 1 - 8 atomes de carbone, des radicaux aryle, au moins un groupe alcoxy étant présent,
R⁴ représente un radical alkylène divalent ayant une longueur de chaîne de 1- 8 atomes de carbone,
ou
(CH₂)ₙ-C₆H₄-(CH₂)ₙ- où n = 1 - 4, et
x est un nombre ≥ 1,
**caractérisé en ce qu'**on fait réagir des organo-silylalkylpolysulfanes de formule générale II
(R¹R²R³SiR⁴)₂S_{y} (II)
dans laquelle
R¹, R², R³ et R⁴ ont les significations données plus haut et
y est un nombre > x,
avec un sulfure ionique de formule générale III
M⁺₂S²⁻ (III)
dans laquelle M⁺ représente un cation de métal alcalin, un ion ammonium, un demi-cation de métal alcalino-terreux ou un demi-cation zinc,
et un halogénure d'organosilylalkyle de formule générale
R¹R²R³SiR⁴X (IV)
dans laquelle
R¹, R², R³ et R⁴ ont les significations données plus haut et
X est chlore, brome ou iode,
en disposant au préalable l'organosilylalkylpolysulfane de formule générale (II) et l'halogénure d'organosilylalkyle de formule générale (IV) et en ajoutant à cette solution le sulfure ionique de formule générale (III) en plusieurs portions.

2. Procédé pour la préparation d'organosilylalkyl-polysulfanes selon la revendication 1, **caractérisé en ce qu'**on effectue la réaction entre la température ambiante et 200 °C.

3. Procédé pour la préparation d'organosilylalkyl-polysulfanes selon la revendication 1, **caractérisé en ce qu'**on fait réagir l'organosilylalkylpolysulfane de formule générale II déjà lors de la formation à partir d'un halogénure d'organosilylalkyle de formule générale IV et d'un polysulfure ionique de formule générale V
M⁺₂S_{y}²⁻ (V)
dans laquelle M⁺ et y ont les significations données plus haut, avec le sulfure ionique de formule générale III et l'halogénure d'organosilylalkyle de formule générale IV.
